# FASCICULE DE BREVET EUROPEEN

(11) **EP 3 570 200 B1**
(45) Date de publication et mention de la délivrance du brevet: **09.03.2022**
(21) Numéro de dépôt: 19173952.3
(22) Date de dépôt: 10.05.2019
(51) Int. Cl.: G06F 21/75, H01L 23/00

(54) **PUCE ÉLÉCTRONIQUE**
ELEKTRONISCHER CHIP
ELECTRONIC CHIP

(30) Priorité: 15.05.2018 FR 1854055
(43) Date de publication de la demande: 20.11.2019
(73) Titulaire: STMICROELECTRONICS (ROUSSET) SAS, 13790 Rousset (FR)
(72) Inventeur: SARAFIANOS, Alexandre, 83910 Pourrieres (FR); NICOLAS, Bruno, 13400 Aubagne (FR); FRONTE, Daniele, 13790 Rousset (FR)
(74) Mandataire: Cabinet Beaumont

(56) Documents cités:
- EP-A1- 3 159 872
- EP-A1- 3 236 496
- US-A1- 2010 026 326
- US-A1- 2016 307 855

## Description

### Domaine

La présente demande concerne les puces électroniques, et en particulier la protection d'une puce contre des attaques.

### Exposé de l'art antérieur

Des puces contenant des informations confidentielles, telles que des puces de cartes bancaires, sont susceptibles d'être la cible d'attaques.

Un type d'attaque peut être mené à partir de la face arrière de la puce, opposée à celle où sont situés des circuits contenant les informations. L'attaquant qrave une partie de la face arrière jusqu'à atteindre des éléments des circuits tels que des transistors, des diodes ou des pistes conductrices. L'attaquant peut ainsi accéder à ces éléments, par lesquels il soutire les informations.

Le document US 2010/0026326 décrit un procédé de détection d'une résistance pour l'exploitation de micropuces défaillantes.

### Résumé

Un mode de réalisation pallie tout ou partie des inconvénients des puces électroniques connues. L'invention est définie dans les revendications 1 et 11.

Un mode de réalisation pallie tout ou partie des inconvénients des dispositifs connus de protection contre des attaques.

Ainsi, un mode de réalisation prévoit une puce électronique comprenant une région résistive et un premier commutateur de sélection d'une première zone en contact avec la région résistive.

Selon un mode de réalisation, la région résistive est en forme de serpentin.

Selon un mode de réalisation, la région résistive comprend un premier caisson enterré sous des deuxièmes caissons.

Selon un mode de réalisation, le premier caisson est disjoint des deuxièmes caissons.

Selon un mode de réalisation, la région résistive est une piste métallique située sur une face de la puce.

Selon un mode de réalisation, la région résistive est définie par un substrat semiconducteur.

Selon un mode de réalisation, la puce comprend un deuxième commutateur de sélection d'une deuxième zone en contact avec la région résistive.

Selon un mode de réalisation, les première et deuxième zones sont situées du côté d'une face de la puce.

Selon un mode de réalisation, la puce comprend en outre un détecteur d'un écart entre valeurs mesurée et attendue de résistance électrique entre les première et deuxième zones.

Selon un mode de réalisation, la puce est configurée pour que ladite valeur attendue soit une valeur sélectionnée.

Selon un mode de réalisation, la puce est configurée pour que la valeur sélectionnée soit sélectionnée aléatoirement.

Selon un mode de réalisation, la puce est configurée pour que soient sélectionnés séquentiellement plusieurs couples de première et deuxième zones entre lesquels la résistance électrique a la valeur attendue.

Un mode de réalisation prévoit un procédé de protection d'une puce ci-dessus contre une attaque.

Selon un mode de réalisation, le procédé comprend :
a) sélectionner les première et deuxième zones ; et
b) comparer à un seuil un écart entre les valeurs mesurée et attendue.

Un mode de réalisation prévoit un procédé de démarrage d'une puce électronique comprenant la mise en oeuvre d'un procédé ci-dessus.

Un mode de réalisation prévoit une puce électronique comprenant une région résistive et un dispositif de connexion à un noeud d'un nombre sélectionnable de premières zones en contact avec la région résistive.

Selon un mode de réalisation, la région résistive est définie par un substrat semiconducteur.

Selon un mode de réalisation, ledit nombre est sélectionnable aléatoirement.

Selon un mode de réalisation, ledit nombre est sélectionnable entre 1 et 16.

Selon un mode de réalisation, les premières zones sont sélectionnables parmi des zones régulièrement réparties.

Selon un mode de réalisation, la puce comprend en outre un détecteur d'un écart entre valeurs mesurée et attendue de résistance électrique entre ledit noeud et une deuxième zone en contact avec la région résistive.

Un mode de réalisation prévoit un dispositif comprenant une puce ci-dessus.

Selon un mode de réalisation, le dispositif comprend une plaque métallique située contre une face arrière de la puce.

Selon un mode de réalisation, les premières zones sont situées en face avant de la puce.

Un mode de réalisation prévoit un procédé de protection d'un dispositif ci-dessus contre une attaque.

Selon un mode de réalisation, le procédé comprend :
sélectionner ledit nombre de premières zones ;
connecter les premières zones audit noeud ; et
comparer à un seuil un écart entre les valeurs mesurée et attendue.

Un mode de réalisation prévoit un procédé de démarrage d'une puce électronique comprenant la mise en oeuvre d'un procédé ci-dessus.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 illustre schématiquement un mode de réalisation d'un dispositif de protection d'un exemple de puce électronique ;
la figure 2 est une vue en coupe de la puce de la figure 1 au cours d'une tentative d'attaque ;
la figure 3 est une vue schématique de dessus d'une partie de la puce de la figure 1 ;
les figures 4A à 4C illustrent, de manière partielle et schématique, des séquences de détection d'une attaque ;
la figure 5 illustre schématiquement un mode de réalisation d'un détecteur du dispositif de la figure 1 ;
la figure 6A est une vue en coupe partielle et schématique d'un autre exemple de puce électronique ;
la figure 6B est une vue de dessus schématique d'un mode de réalisation d'une région résistive de la puce de la figure 6A ;
la figure 7 est une vue en coupe partielle et schématique d'un autre exemple de puce électronique ; et
la figure 8 illustre schématiquement un autre mode de réalisation d'un dispositif de protection d'une puce électronique.

### Description détaillée

De mêmes éléments ont été désignés par de mêmes références dans les différentes figures et, de plus, les diverses figures ne sont pas tracées à l'échelle. Par souci de clarté, seuls les éléments utiles à la compréhension des modes de réalisation décrits ont été représentés et sont détaillés. En particulier, des circuits de la puce contenant des informations confidentielles ne sont pas détaillés, les modes de réalisation décrits étant compatibles avec les circuits courants.

Dans la description qui suit, lorsque l'on fait référence à des qualificatifs de position absolue, tels que les termes "avant", "arrière", "haut", "bas", "gauche", "droite", etc., ou relative, tels que les termes "dessus", "dessous", "supérieur", "inférieur", etc., ou à des qualificatifs d'orientation, tels que les termes "horizontal", "vertical", etc., il est fait référence à l'orientation des figures concernées dans une position normale d'utilisation. Sauf précision contraire, les expressions "approximativement", "sensiblement", "environ" et "de l'ordre de" signifient à 10 % près, de préférence à 5 % près.

Dans la présente description, sauf indication contraire, le terme "connecté" désigne une connexion électrique directe entre deux éléments, par exemple par des matériaux conducteurs, tandis que le terme "couplé" ou "relié" désigne une connexion électrique entre deux éléments qui peut être directe ou par l'intermédiaire d'un ou de plusieurs composants passifs ou actifs, comme des résistances, des condensateurs, des inductances, des diodes, des transistors, etc.

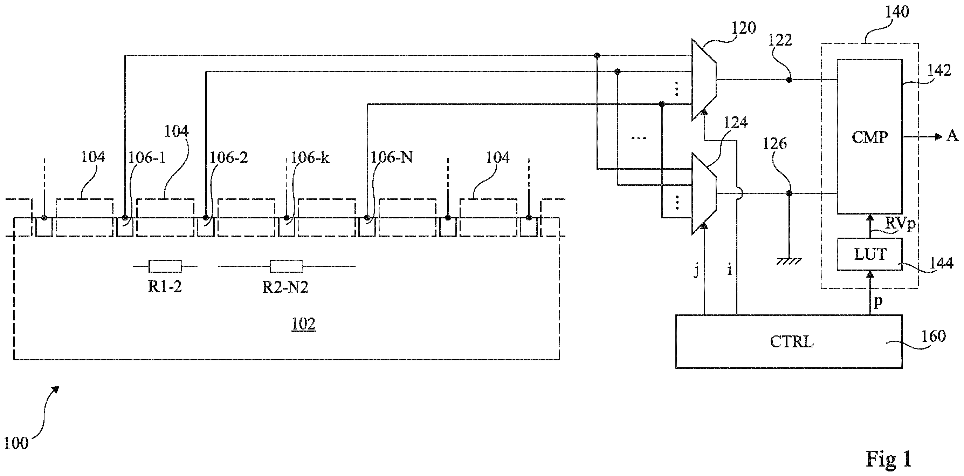

La figure 1 illustre de manière schématique un mode de réalisation d'un dispositif de protection d'un exemple de puce électronique 100. La puce 100 est partiellement représentée en coupe. Le dispositif de protection est par exemple compris dans la puce.

La puce 100 comprend une région électriquement résistive 102 définie de préférence par un substrat semiconducteur, par exemple en silicium. Des circuits à protéger de la puce sont situés dans et sur le substrat dans des régions 104.

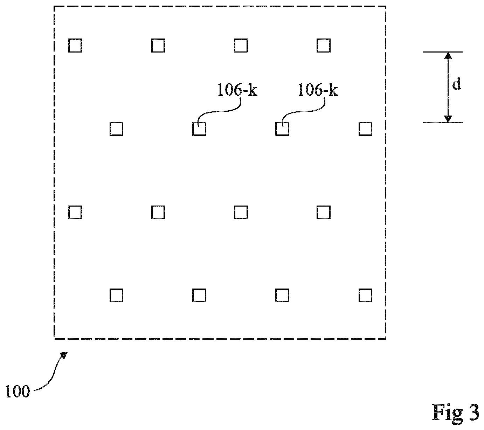

La puce 100 comprend des zones 106-k en contact avec la région résistive 102, ou contacts 106-k. Chaque zone 106-k est par exemple une zone plus fortement dopée de même type de conductivité que le substrat. Les contacts 106-k sont répartis entre les régions 104, de préférence régulièrement. Un exemple de répartition est décrit ci-après en relation avec la figure 3.

La puce 100 comprend un commutateur de sélection 120. Le commutateur 120 est relié, par exemple connecté, aux contacts 106-k. En fonctionnement, le commutateur 120 reçoit un signal de commande ayant une valeur par exemple entière i comprise entre 1 et N₁. Le commutateur 120 sélectionne un contact 106-i en fonction de la valeur i parmi les contacts 106-k. Le commutateur 120 connecte alors le contact 106-i à un noeud 122, c'est-à-dire permet le passage d'un courant entre le contact 106-i et le noeud 122. Le commutateur 120 isole électriquement les contacts non sélectionnés.

De préférence, la puce comprend en outre un commutateur de sélection 124. Le commutateur 124 est relié, par exemple connecté, aux contacts 106-k. En fonctionnement, le commutateur 124 reçoit un signal de commande ayant une valeur par exemple entière j comprise entre 1 et N₂. Le commutateur sélectionne un contact 106-j en fonction de la valeur j parmi les contacts 106-k. Le commutateur 124 connecte alors le contact 106-j à un noeud 126, c'est-à-dire permet le passage d'un courant entre le contact 106-j et le noeud 126. Le commutateur 124 isole électriquement les contacts non sélectionnés. Des valeurs entières j différentes sont possibles pour une même valeur entière i. De même, des valeurs entières i différentes sont possibles pour une même valeur entière j. Autrement dit, chacun des commutateurs 120 et 124 permet de sélectionner des contacts différents lorsque l'autre des commutateurs 120 et 124 sélectionne un même contact.

Ainsi, les commutateurs 120 et 124 sont agencés pour connecter électriquement, entre les noeuds 122 et 126, une résistance Ri-j comprenant une portion de la région résistive 102. A titre illustratif, on a représenté des résistances R1-2 et R2-N₂ correspondant respectivement à i=1 et j=2, et à i=2 et j=N₂. Chaque résistance Ri-j a une valeur attendue. La valeur attendue est par exemple une valeur prévue à la conception de la résistance Ri-j. La valeur attendue peut aussi être la valeur mesurée d'une résistance de référence. La résistance de référence est par exemple identique à la résistance Ri-j, c'est-à-dire comprend, à la variabilité du procédé de fabrication près, des mêmes matériaux que ceux de la résistance Ri-j agencés de manière identique. La valeur attendue dépend en particulier de la distance entre les contacts 106-i et 106-j. Les diverses résistances Ri-j ont des valeurs attendues parmi un nombre M de valeurs attendues RVp possibles en fonction des valeurs i et j, p étant une valeur par exemple entière comprise entre 1 et M. Plusieurs couples de valeurs i et j peuvent correspondre à une même valeur attendue RVp de la résistance Ri-j, par exemple lorsque les contacts 106-i et 106-j sont à une même distance l'un de l'autre.

A titre d'exemple, les noeuds 122 et 126 sont connectés à un circuit de détection 140 configuré pour détecter une attaque et fournir un signal d'alerte A en cas d'attaque.

Le circuit 140 comprend par exemple un détecteur 142 (CMP) qui compare une valeur mesurée de la résistance Ri-j entre les noeuds 122 et 126 à la valeur attendue correspondante RVp. Le détecteur 142 est connecté aux noeuds 122 et 126 et fournit le signal A. En pratique, on prévoit que le noeud 126 soit un noeud d'application d'un potentiel fixe, par exemple un potentiel de référence tel que la masse.

Le détecteur 142 est de préférence un détecteur d'un écart supérieur à un seuil entre une valeur mesurée de la résistance entre les noeuds 122 et 126 et la valeur attendue correspondante RVp. L'écart est par exemple en valeur absolue. De préférence, le seuil est prévu pour qu'il n'y ait pas de détection lorsque l'écart est dû seulement ou principalement à la variabilité du procédé de fabrication de la puce.

Le circuit 140 peut comprendre en outre un circuit 144 (LUT) agencé pour fournir la valeur attendue RVp au détecteur 142. Le circuit 144 comporte par exemple une mémoire comprenant une table de correspondance ("lookup table") entre la valeur p et la valeur attendue RVp correspondante.

La puce peut comprendre en outre un circuit de commande 160 (CTRL) agencé pour fournir les valeurs i, j et p.

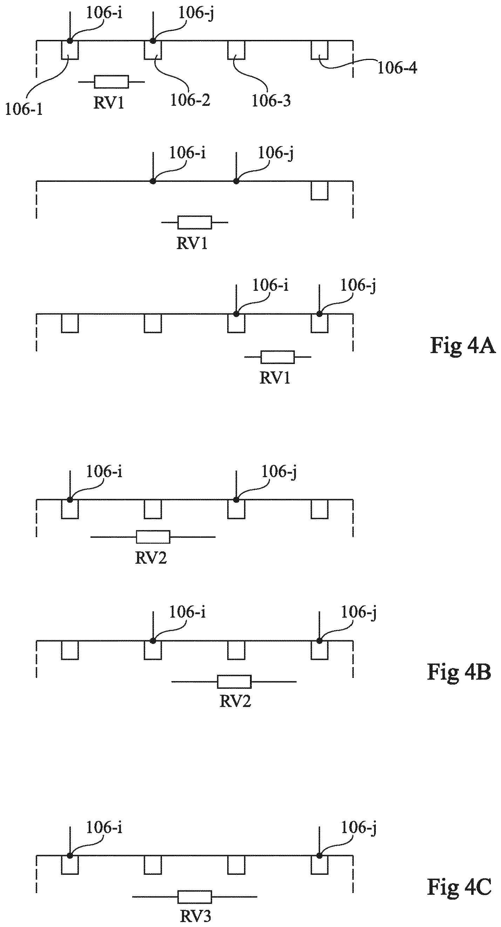

Au cours du fonctionnement de la puce, on prévoit des phases de test, de préférence en cours de démarrage de la puce. Au cours de la phase de test, le circuit de commande 160 choisit la valeur p par exemple aléatoirement. La valeur attendue RVp correspondante est ainsi choisie aléatoirement parmi les diverses valeurs attendues. Le circuit de commande 160 choisit des couples de valeurs i et j pour lesquels la valeur attendue est la valeur RVp choisie. De préférence, des couples de valeurs i et j pour lesquels la valeur attendue est la valeur RVp choisie sont alors sélectionnés séquentiellement au cours de la phase de test. Ces couples correspondent par exemple à une même distance entre contacts 106-i et 106-j. Un exemple de séquence de sélection des valeurs i et j est décrit ci-après en relation avec les figures 4A à 4C.

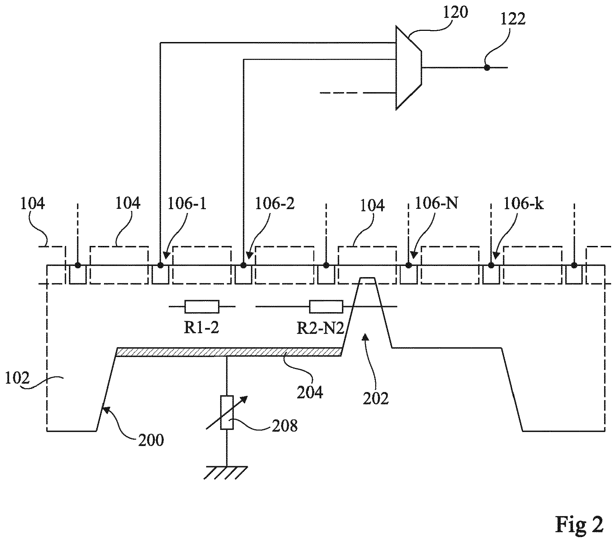

La figure 2 est une vue en coupe de la puce de la figure 1 au cours d'une tentative d'attaque.

Une partie 200 de la face arrière a été gravée. Au fond de la partie gravée 200, une cavité 202 est creusée en direction des composants de l'une des régions 104. Plusieurs cavités 202 peuvent être gravées à partir de la partie 200. La cavité 202 peut être gravée par faisceau ionique focalisé ("focused ion beam"). De préférence, les dimensions latérales de la cavité 202 sont inférieures à 20 µm, par exemple comprises entre 2 et 10 µm. La partie 200 a des dimensions latérales de préférence supérieures à 5 fois celles de la cavité 202, par exemple entre 10 et 20 fois supérieures. La partie 200 a des dimensions latérales typiquement supérieures à 100 µm, par exemple de l'ordre de 100 µm à 200 µm.

La présence de la cavité 200 influe sur la valeur de résistance de la région électriquement résistive 102 située entre deux des contacts 106-k. Dans l'exemple illustré, la valeur de la résistance R2-N₂ entre les contacts 106-2 et 106-N₂ est plus élevée que ce qu'elle était avant l'attaque. L'écart entre la valeur mesurée de la résistance R2-N₂ et la valeur attendue correspondante provoque l'émission du signal d'alerte A par le détecteur 140. Le signal A est utilisé par la puce pour déclencher des contre-mesures destinées à faire échouer l'attaque, par exemple stopper le fonctionnement de la puce. Le signal A peut être exploité par la puce pour prendre toute contre-mesure usuelle pour stopper l'attaque.

Pour contrer la détection de la gravure de la partie 200, une autre attaque consiste à former une métallisation 204 au fond de la partie gravée 200. On relie la métallisation 200 à la masse par une résistance 208, de préférence réglable. On recherche alors la valeur de la résistance 208 permettant d'éviter que l'attaque ne soit détectée. Cependant, du fait que la valeur attendue RVp change à chaque phase de test, aucun réglage de la résistance 208 ne permet désormais d'éviter que l'attaque soit détectée. De plus, du fait que la valeur attendue RVp change de manière aléatoire, aucune succession de réglages de la résistance 208 ne permet d'obtenir les informations confidentielles de la puce. La puce obtenue est ainsi protégée contre les attaques de manière particulièrement efficace.

La figure 3 est une vue schématique de dessus d'un exemple d'une partie de la puce 100 de la figure 1.

Les contacts 106-k sont répartis régulièrement en lignes. Ces lignes sont séparées d'une distance d typiquement comprise entre 10 et 50 µm, de préférence d'environ 25 µm. La distance entre contacts d'une même ligne est par exemple approximativement égale, de préférence égale, à la distance entre lignes. Un contact peut avoir des dimensions latérales inférieures à 10 % de la distance d, par exemple de l'ordre de 0,2 à 2 µm. A titre d'exemple, les contacts reliés aux commutateurs 120 et 124 forment un groupe de 16 contacts. Les contacts du groupe sont par exemple répartis dans un carré. Le groupe de 16 contacts peut être répété dans la puce, par exemple régulièrement. Les contacts de chaque groupe peuvent alors être couplés, par exemple connectés, à des commutateurs 120 et 124 d'autres dispositifs de détection d'attaque similaires à celui de la figure 1. Bien que l'on ait prévu dans cet exemple un groupe de 16 contacts, on peut prévoir des groupes comportant tout nombre de contacts supérieur ou égal à deux.

Les figures 4A à 4C illustrent, de manière partielle et schématique, des exemples de séquences de détection d'une attaque de la puce de la figure 1. Les séquences des figures 4A à 4C concernent par exemple un groupe de quatre contacts de la puce, référencés 106-1 à 106-4 de gauche à droite.

A chaque phase de test de la puce, l'une des séquences des figures 4A à 4C est sélectionnée par le circuit de commande, de préférence aléatoirement.

La séquence de la figure 4A comprend trois étapes. Les couples voisins de contacts sont sélectionnés successivement. Les trois étapes correspondent à une même valeur attendue RV1 de résistance. A la première étape, les valeurs i et j sont respectivement égales à 1 et 2. A la deuxième étape, les valeurs i et j sont respectivement égales à 2 et 3. A la troisième étape, les valeurs i et j sont respectivement égales à 3 et 4.

La séquence de la figure 4B comprend deux étapes. Les couples de contacts entre lesquels se trouve un seul contact sont sélectionnés successivement. Les deux étapes correspondent à une même valeur attendue RV2 de résistance. A la première étape, les valeurs i et j sont respectivement égales à 1 et 3. A la seconde étape, les valeurs i et j sont respectivement égales à 2 et 4.

La séquence de la figure 4C comprend une seule étape à laquelle le couple des contacts 106-1 et 106-4 est sélectionné. Ceci correspond à une valeur attendue RV3.

Les séquences des figures 4A à 4C peuvent être adaptées à des groupes de moins ou de plus de quatre contacts. On peut alors obtenir plus ou moins de trois séquences possibles. En outre, bien que l'on ait illustré ici des séquences pour des contacts alignés, on pourra aussi prévoir des séquences concernant des contacts disposés différemment en face avant de la puce, par exemple selon la disposition décrite en relation avec la figure 2. Dans ce cas, chaque séquence peut comprendre successivement des étapes pour lesquelles les contacts 106-i et 106-j sont à une même distance, de préférence choisie aléatoirement.

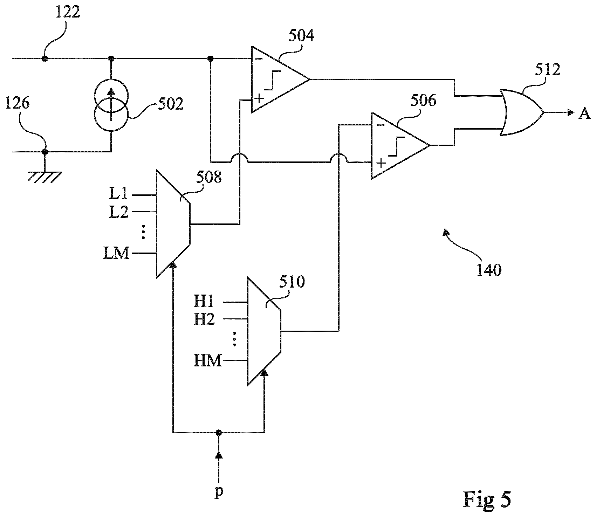

La figure 5 illustre schématiquement un exemple d'un détecteur 140 d'un dispositif de protection d'une puce électronique.

Le détecteur 140 comprend une source de courant 502 entre le noeud 126, par exemple connecté à la masse, et le noeud 122. Le noeud 122 est relié, par exemple connecté, à une entrée négative (inverseuse) d'un comparateur 504. De plus, le noeud 122 est relié, par exemple connecté, à une entrée positive (non inverseuse) d'un comparateur 506. L'entrée positive du comparateur 504 est reliée, par exemple connectée, à la sortie d'un commutateur de sélection 508. Le commutateur 508, par exemple un multiplexeur commandé par la valeur p, est agencé pour sélectionner un signal Lp (L1, L2... LM) en fonction de la valeur p. L'entrée négative du comparateur 506 est reliée, par exemple connectée, à la sortie d'un commutateur de sélection 510. Le commutateur 510, par exemple un multiplexeur commandé par la valeur p, est agencé pour sélectionner un signal Hp (H1, H2... HM) en fonction de la valeur p. Les sorties des comparateurs 504 et 506 sont reliées, par exemple connectées, aux entrées d'une porte OU 512 destinée à fournir le signal d'alerte A en cas d'attaque.

Chaque valeur Lp correspond à la valeur attendue RVp de résistance diminuée d'une valeur de seuil. Chaque valeur Hp correspond à la valeur attendue RVp de résistance augmentée d'une valeur de seuil. Chaque valeur attendue peut être fournie par un dispositif de mesure de résistance d'un élément résistif de la puce. A titre d'exemple, cet élément résistif est formé entre deux contacts 106-k disposés de sorte que la valeur attendue de la résistance entre ces deux contacts soit la valeur RVp.

Une tentative d'attaque est détectée lorsque, au cours d'une phase de test, la valeur mesurée de la résistance Rp se trouve en dehors de la plage comprise entre Lp et Hp. Les valeurs Lp et Hp sont de préférence prévues pour que les plages associées soient disjointes.

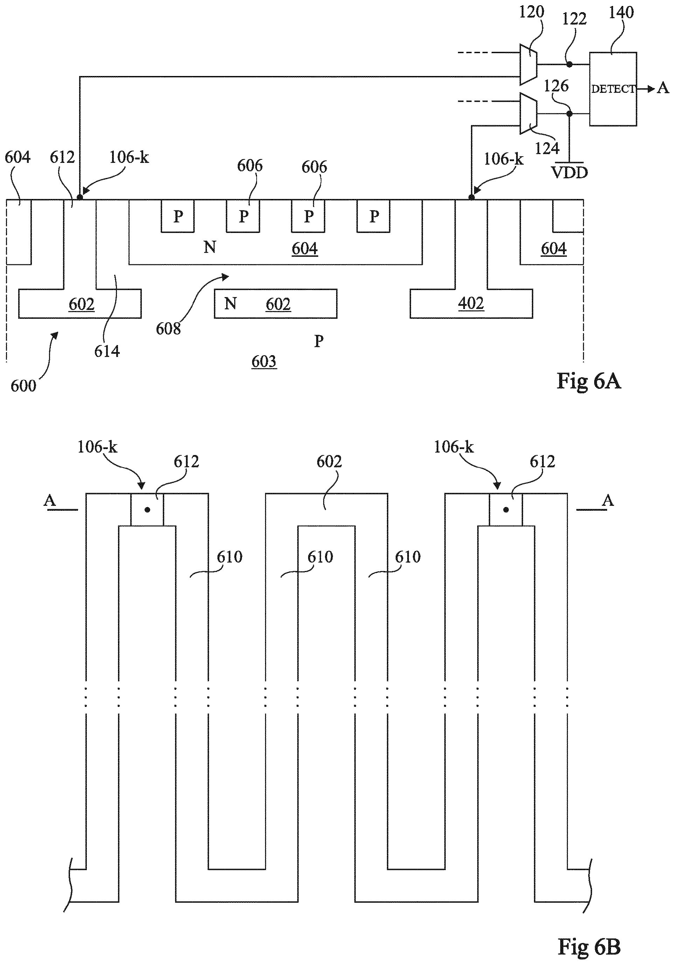

La figure 6A est une vue en coupe partielle et schématique d'un mode de réalisation d'une puce électronique 600 comprenant une région résistive 602 dans un substrat 603, selon un plan de coupe A-A représenté en figure 6B. La figure 6B est une vue de dessus schématique de la région résistive 602. La puce 600 comprend le même dispositif de protection, non représenté en figures 6A et 6B, que la puce 100 de la figure 1.

La puce 600 comprend un substrat semiconducteur 603, par exemple dopé de type P. Le substrat 603 est par exemple connecté à la masse. Un ou plusieurs caissons 604, dopés de type N, s'étendent dans le substrat 603 à partir de la face avant. Des caissons 606 dopés de type P, par exemple régulièrement espacés, sont situés dans les caissons N du côté de la face avant des caissons N 604. Des éléments des circuits à protéger de la puce électronique, non représentés, sont formés dans et sur les caissons 604 et 606.

La région résistive 602 est une région dopée de type N enterrée sous les caissons 604. La région 602 est disjointe des caissons 604. La région 602 est par exemple séparée des caissons 604 par une partie 608 du substrat. A titre d'exemple, la région 602 a, vue de dessus, une forme de serpentin. Le serpentin comprend des portions 610 parallèles entre elles, et des parties reliant les extrémités de chaque portion 610 à une portion 610 voisine. Les portions 610 sont par exemple disposées régulièrement. Les portions 610 voisines sont de préférence séparées d'une distance inférieure aux dimensions latérales de cavités qu'un attaquant est susceptible de graver. Les portions 610 sont par exemple séparées d'une distance inférieure à 10 µm, de préférence inférieure à 5 µm. Les portions 610 ont typiquement une forme de ruban. La largeur des rubans est par exemple comprise entre 30 % et 150 % de la distance entre les portions 610 voisines, par exemple comprise entre 2 et 5 µm. La largeur des rubans et la distance entre les portions 610 voisines peuvent dépendre de la profondeur des caissons enterrés.

A titre d'exemple, les contacts 106-k sont définis chacun par une zone de prise de contact 612 s'étendant de la face avant du substrat 603 à la région résistive 602. Les zones 612 sont par exemple des caissons dopés de type N. Les zones 612 sont disjointes des caissons 604. Les zones 612 sont par exemple entourées par des parties 614 du substrat séparant les zones 612 des caissons 604. Les contacts 106-k sont par exemple régulièrement répartis le long du serpentin. Les contacts 106-k peuvent être disposés sur les parties reliant les portions 610 voisines.

Le noeud 126 est par exemple un noeud d'application d'un potentiel VDD. L'application d'un potentiel VDD permet de polariser en inverse la jonction PN entre la région résistive N 602 et le substrat dopé P environnant. Pour deux valeurs i et j sélectionnées, le circuit de détection 140 compare des valeurs mesurée et attendue de la résistance de la portion de serpentin comprise entre les contacts 106-i et 106-j.

En cas d'attaque du type décrit en relation avec la figure 2, une cavité endommage le serpentin. Une résistance variable est éventuellement couplée, par exemple connectée, au serpentin endommagé. Du fait que la valeur attendue de résistance change aléatoirement à chaque phase de test, aucune valeur de la résistance variable ne permet de dissimuler la tentative d'attaque.

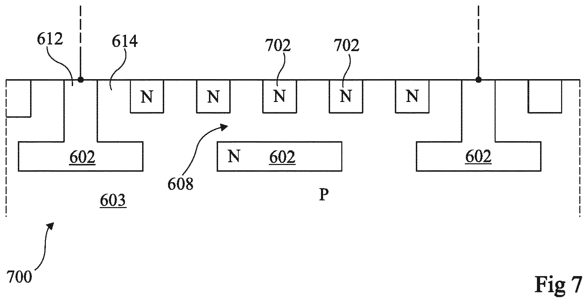

La figure 7 est une vue en coupe partielle et schématique d'un mode de réalisation d'une puce électronique 700. La puce 700 de la figure 7 diffère de la puce 600 des figures 6A et 6B en ce que la puce 700 ne comprend pas de caissons N 604, et en ce que la puce 700 comprend des caissons 702 dopés de type N. Les caissons N 702 sont par exemple régulièrement espacés du côté de la face avant du substrat. Des éléments des circuits à protéger sont situés dans et sur les caissons N 702 et les portions du substrat 603 situés entre les caissons N 702.

La région résistive enterrée 602 est située sous les caissons N 702. La région 602 est disjointe des caissons N 702. La région 602 est par exemple séparée des caissons N 702 par une portion 608 du substrat. Les zones de prise de contact 612 sont entourées de régions 614 du substrat qui les séparent des caissons N 702.

Les types de conductivité des régions dopées des puces 600 et 700 décrites ci-dessus peuvent être inversés. On peut au besoin inverser les sens des tensions et courants appliqués pour mesurer la résistance entre les contacts 106-i et 106-j.

A titre de variante, la région résistive enterrée en forme de serpentin des puces 600 et 700 décrites ci-dessus peut être remplacée par une région résistive en forme de serpentin située au-dessus des circuits du côté de la face avant, ou située sur la face arrière de la puce. La région résistive en forme de serpentin peut en outre être réalisée en un conducteur, par exemple métallique. A titre d'exemple, la région résistive est une piste conductrice en forme de serpentin située dans des couches d'isolant électrique recouvrant la face avant de la puce. La puce est alors protégée contre des attaques par la face avant.

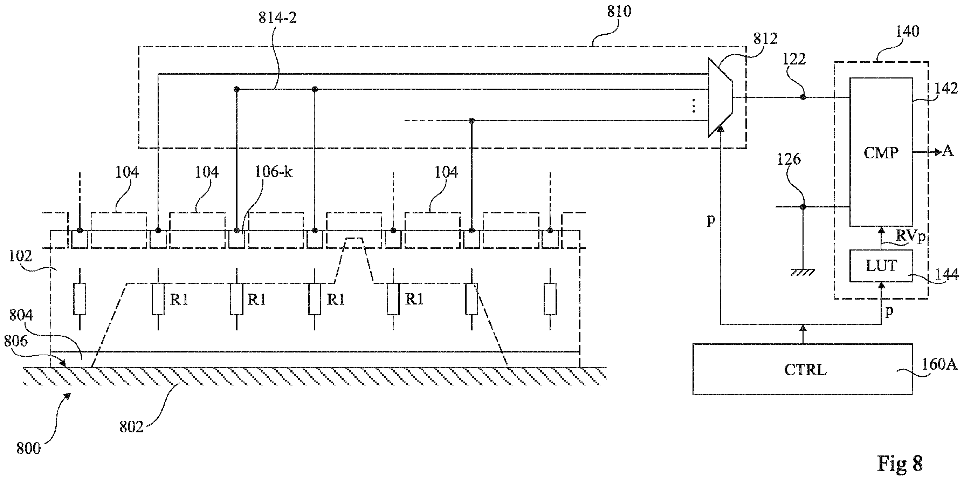

La figure 8 illustre schématiquement un autre mode de réalisation d'un dispositif de protection d'une puce électronique 800.

La puce de la figure 8 reprend des éléments identiques ou similaires à ceux de la figure 1, agencés de manière identique ou similaire. La puce 800 de la figure 8 diffère de la puce 100 de la figure 1 en ce que :
la puce repose sur une plaque conductrice 802, par exemple un plan de masse, et comprend une région 804 adaptée à former un contact électrique 806 entre la face arrière du substrat et la plaque conductrice 802 ;
les commutateurs 120 et 124 de la figure 1 sont remplacés par un dispositif de connexion 810 ; et
le circuit de commande 160 est remplacé par un circuit de commande 160A adapté à fournir une valeur p, par exemple entière comprise entre 1 et M.

Le dispositif de connexion 810 est agencé pour recevoir la valeur p et sélectionner un nombre p de contacts parmi les contacts 106-k de la puce. Le dispositif de connexion 810 connecte alors les p contacts sélectionnés par exemple au noeud 122, c'est-à-dire permet le passage de courant entre les contacts sélectionnés et le noeud 122. Le dispositif de connexion 810 isole électriquement les contacts non sélectionnés. Les contacts sélectionnés sont connectés simultanément au noeud 122.

A titre d'exemple, le dispositif 810 comprend des connexions 814-q, q étant un entier compris entre 2 et M'. Chaque connexion 814-q relie entre eux, par exemple connecte entre eux, un nombre q de contacts parmi les contacts 106-k. A titre illustratif, on a représenté une connexion 814-2 reliant deux contacts 106-k. Le dispositif 810 peut comprendre un commutateur de sélection 812 relié à l'un des contacts 106-k et aux connexions 810-q. Lorsque la valeur p est égale à 1, le commutateur de sélection sélectionne ce contact 106-k. Lorsque la valeur p est supérieure à 1, le commutateur 812 sélectionne la connexion 814-p.

A titre de variante non représentée, le dispositif de connexion comprend pour chaque contact 106-k un interrupteur, par exemple un transistor, entre le contact 106-k et le noeud 122. Le dispositif de connexion peut alors être configuré pour rendre simultanément passants un nombre d'interrupteurs égal à la valeur p.

Ainsi, quand la valeur p est égale à 1, le dispositif 810 permet de connecter, entre les noeuds 122 et 126, une résistance R1 de valeur attendue RV1, correspondant à une portion verticale du substrat 102 entre la plaque 802 et le contact 106-k considéré. Si la valeur p est supérieure à 1, le commutateur permet de connecter, en parallèle, un nombre de portions du substrat égal à la valeur p. La valeur attendue RVp de ces portions en parallèle est par exemple de l'ordre de RV1/p. La valeur attendue RV1 est par exemple comprise entre 200 kΩ et 1 MΩ, de préférence de l'ordre de 500 kΩ. La valeur attendue RV1 peut dépendre du niveau de dopage du substrat et de son épaisseur. On obtient ainsi des valeurs attendues RVp différentes en fonction de la valeur p.

A chaque phase de test, le circuit de commande choisit la valeur p, de préférence aléatoirement en sorte que la valeur attendue RVp soit choisie aléatoirement.

Pour tenter une attaque, on peut séparer la puce du plan de masse 802. On supprime ainsi le contact électrique entre la face arrière du substrat et le noeud 126. Le dispositif de protection détecte la tentative d'attaque et des contre-mesures sont prises.

Un contact électrique peut être rétabli entre la face arrière et la masse, par exemple par un fil conducteur. Une attaque du type décrit en relation avec la figure 2 peut alors être tentée, c'est-à-dire en gravant une partie 200 de la face arrière et en creusant une cavité 202. On modifie la valeur de résistance d'une partie de la région résistive. Cette valeur de résistance s'écarte de la valeur attendue, et la tentative d'attaque est ainsi détectée. Afin d'esquiver la détection par la puce, une résistance réglable peut être couplée, par exemple connectée, entre le fond de la partie gravée 200 et la masse, de la manière décrite en relation avec la figure 2. Cependant, du fait que la valeur attendue RVp est choisie aléatoirement, aucun réglage de la résistance réglable ne permet d'éviter que la tentative d'attaque soit détectée.

Des modes de réalisation particuliers ont été décrits. Diverses variantes et modifications apparaîtront à l'homme de l'art.

Divers modes de réalisation avec diverses variantes ont été décrits ci-dessus. On notera que l'homme de l'art pourra combiner divers éléments de ces divers modes de réalisation et variantes sans faire preuve d'activité inventive. En particulier, la disposition des contacts 106-k décrite en relation avec la figure 3 est applicable à la puce 800 de la figure 8. En outre, on peut grouper les contacts de la puce 800 de la manière décrite en relation avec la figure 3. A titre d'exemple, pour un groupe de seize contacts, on pourra prévoir que la valeur de p soit entre 1 et 16. De plus, le détecteur de la figure 5 est compatible avec la puce 800 de la figure 8.

Enfin, la mise en oeuvre pratique des modes de réalisation décrits est à la portée de l'homme du métier à partir des indications fonctionnelles données ci-dessus.

## Revendications

1. Puce électronique comprenant des moyens de protection contre des attaques, les dits moyens comprenant
- une région résistive (102 ; 602) ;
- un dispositif de connexion (810) à un noeud (122) d'un nombre (N₁) sélectionnable de premières zones (106-k) en contact avec la région résistive (102) ;
- un détecteur (140) d'un écart entre valeurs mesurée et attendue (RVp) de résistance électrique entre ledit noeud (122) et une deuxième zone (804) en contact avec la région résistive, ladite valeur attendue étant sélectionnée aléatoirement.

2. Puce électronique selon la revendication 1 comprenant en outre :
- un premier commutateur (120) de sélection d'une première zone (106-i) en contact avec la région résistive ;
- un deuxième commutateur (124) de sélection d'une deuxième zone (106-j) en contact avec la région résistive (102 ; 602) ; et
- ledit détecteur (140) détectant un écart entre valeurs mesurée et attendue (RVp) de résistance électrique entre les première (106 i) et deuxième (106 j) zones.

3. Puce selon la revendication 1 ou 2, dans laquelle la région résistive (602) est en forme de serpentin.

4. Puce selon l'une quelconque des revendications 1 à 3, dans laquelle les première (106-i) et deuxième (106-j) zones sont situées du côté d'une face de la puce (100 ; 500 ; 600).

5. Puce selon la revendication 2, configurée pour que soient sélectionnés séquentiellement plusieurs couples de première (106-i) et deuxième (106-j) zones entre lesquels la résistance électrique a la valeur attendue (RVp).

6. Puce selon la revendication 5, dans laquelle :
ledit nombre (n) est sélectionnable aléatoirement ; et/ou
ledit nombre (N₁) est sélectionnable entre 1 et 16 ; et/ou
les premières zones (106-k) sont sélectionnables parmi des zones régulièrement réparties.

7. Puce selon l'une quelconque des revendications 1 à 6, dans laquelle la région résistive comprend :
un premier caisson (602) enterré sous des deuxièmes caissons (604 ; 702), et, de préférence, disjoint des deuxièmes caissons (604 ; 702) ; ou
une piste métallique située sur une face de la puce (500 ; 600).

8. Puce selon l'une quelconque des revendications 1 à 7, dans laquelle la région résistive (102) est définie par un substrat semiconducteur.

9. Dispositif comprenant une puce selon l'une quelconque des revendications 1 à 8.

10. Dispositif selon la revendication 9, comprenant une plaque métallique (802) située contre une face arrière de la puce, les premières zones (106-k) étant de préférence situées en face avant de la puce.

11. Procédé de protection contre des attaques d'un dispositif selon la revendication 9 ou 10 ou d'une puce selon l'une quelconque des revendications 1 à 8, comprenant les étapes de protection contre une attaque:
- connexion à un noeud d'un nombre sélectionnable de premières zones en contact avec une région résistive de la puce ;
- détection d'un écart entre valeurs mesurée et attendue de résistance électrique entre ledit noeud et une deuxième zone en contact avec la région résistive, ladite valeur attendue étant sélectionnée aléatoirement

12. Procédé selon la revendication 11, comprenant :
a) sélectionner les première (106-i) et deuxième (106-j) zones ; et
b) comparer à un seuil l'écart entre les valeurs mesurée et attendue (RVp).

13. Procédé selon la revendication 11 dans sa dépendance à la revendication 4, comprenant :
sélectionner ledit nombre de premières zones (106-k) ;
connecter les premières zones audit noeud (122).

14. Procédé de démarrage d'une puce électronique comprenant la mise en oeuvre d'un procédé selon l'une quelconque des revendications 11 à 13.

## Patentansprüche

1. Ein elektronischer Chip, der Mittel zum Schützen gegen Angriffe umfasst, wobei die Mittel umfassen:
- einen Widerstandsbereich (102; 602);
- eine Vorrichtung (810) zum Verbinden mit einem Knoten (122) von einer wählbaren Anzahl (N₁) von ersten Bereichen (106-k), die in Kontakt mit dem Widerstandsbereich (102) sind;
- einen Detektor (140) zum Detektieren einer Abweichung zwischen gemessenen und erwarteten elektrischen Widerstandswerten (RVp) zwischen dem Knoten (122) und einem zweiten Bereich (804), der in Kontakt mit dem Widerstandsbereich ist, wobei der erwartete Wert zufällig wählbar ist.

2. Elektronischer Chip nach Anspruch 1, ferner umfassend:
- einen ersten Schalter (120) zum Auswählen eines ersten Bereichs (106-i), der in Kontakt mit dem Widerstandsbereich ist;
- einen zweiten Schalter (124) zum Auswählen eines zweiten Bereichs (106-j), der mit dem Widerstandsbereich (102; 602) in Kontakt ist; und
- wobei der Detektor (140) eine Abweichung zwischen gemessenen und erwarteten elektrischen Widerstandswerten (RVp) zwischen den ersten (106 i) und zweiten (106 j) Bereichen detektiert.

3. Chip nach Anspruch 1 oder 2, wobei der Widerstandsbereich (602) serpentinenförmig ist.

4. Chip nach irgendeinem der Ansprüche 1 bis 3, wobei die ersten (106-i) und zweiten (106-j) Bereiche auf der Seite einer Oberfläche des Chips (100; 500; 600) angeordnet sind.

5. Chip nach Anspruch 2, der so konfiguriert ist, dass eine Vielzahl von Paaren von ersten (106-i) und zweiten (106-j) Bereichen, zwischen denen der elektrische Widerstand den erwarteten Wert (RVp) aufweist, sequenziell ausgewählt werden.

6. Chip nach Anspruch 5, wobei:
die Zahl (n) zufällig wählbar ist; und/oder die Zahl (N₁) zwischen 1 und 16 wählbar ist; und/oder
die ersten Bereiche (106-k) aus regelmäßig verteilten Bereichen auswählbar sind.

7. Chip nach irgendeinem der Ansprüche 1 bis 6, wobei der Widerstandsbereich umfasst:
eine erste Wanne (602), die unter zweiten Wannen (604; 702) begraben ist und vorzugsweise von den zweiten Wannen (604; 702) getrennt ist; oder
eine metallische Spur, die auf einer Seite des Chips (500; 600) angeordnet ist.

8. Chip nach irgendeinem der Ansprüche 1 bis 7, wobei der Widerstandsbereich (102) durch ein Halbleitersubstrat definiert ist.

9. Eine Vorrichtung, die den Chip nach irgendeinem der Ansprüche 1 bis 8 beinhaltet.

10. Vorrichtung nach Anspruch 9, umfassend eine metallische Platte (802), die gegen eine Rückseite des Chips angeordnet ist, wobei die ersten Bereiche (106-k) vorzugsweise auf einer Vorderseite des Chips angeordnet sind.

11. Verfahren zum Schützen gegen Angriffe der Vorrichtung nach Anspruch 9 oder 10 oder den Chip nach irgendeinem der Ansprüche 1 bis 8, wobei das Verfahren die folgenden Schritte zum Schützen gegen einen Angriff umfasst:
Verbinden mit einem Knoten einer wählbaren Anzahl von ersten Bereichen, die in Kontakt mit dem Widerstandsbereich des Chips sind;
Detektieren einer Abweichung zwischen gemessenen und erwarteten elektrischen Widerstandswerten zwischen dem Knoten und einem zweiten Bereich, der in Kontakt mit dem Widerstandsbereich ist, wobei der erwartete Wert zufällig wählbar ist.

12. Verfahren nach Anspruch 11, umfassend:
a) Auswählen der ersten (106-i) und zweiten (106-j) Bereiche; und
b) Vergleichen mit einem Schwellenwert der Abweichung zwischen den gemessenen und erwarteten Werten (RVp).

13. Verfahren nach Anspruch 11 wenn abhängig vom Anspruch 4, umfassend:
Auswählen der Anzahl von ersten Bereichen (106-k);
Verbinden der ersten Bereiche mit dem Knoten (122).

14. Verfahren zum Anschalten eines elektronischen Chips, das die Implementierung des Verfahrens nach irgendeinem der Ansprüche 11 bis 13 umfasst.

## Claims

1. An electronic chip comprising means for protecting against attacks, said means comprising:
- a resistive region (102; 602);
- a device of connection (810) to a node (122) of a selectable number (N₁) of first areas (106-k) in contact with the resistive region (102);
- a detector (140) of a difference between measured and expected electric resistance values (RVp) between said node (122) and a second area (804) in contact with the resistive region, said expected value being randomly selectable.

2. The electronic chip of claim 1, further comprising:
- a first switch (120) of selection of a first area (106-i) in contact with the resistive region;
- a second switch (124) of selection of a second area (106-j) in contact with the resistive region (102; 602); and
- said detector (140) detecting a difference between measured and expected electric resistance values (RVp) between the first (106 i) and second (106 j) areas.

3. The chip of claim 1 or 2, wherein the resistive region (602) is coil-shaped.

4. The chip of any of claims 1 to 3, wherein the first (106-i) and second (106-j) areas are located on the side of a surface of the chip (100; 500; 600).

5. The chip of claim 2, configured so that a plurality of pairs of first (106-i) and second (106-j) areas between which the electric resistance has the expected value (RVp) are sequentially selected.

6. The chip of claim 5, wherein:
said number (n) is randomly selectable; and/or
said number (N₁) is selectable between 1 and 16; and/or
the first areas (106-k) are selectable from among regularly distributed areas.

7. The chip of any of claims 1 to 6, wherein the resistive region comprises:
a first well (602) buried under second wells (604; 702), and preferably, separated from the second wells (604; 702); or
a metal track located on a surface of the chip (500; 600) .

8. The chip of any of claims 1 to 7, wherein the resistive region (102) is defined by a semiconductor substrate.

9. A Device including the chip of any of claims 1 to 8.

10. The device of claim 9, comprising a metal plate (802) located against a back side of the chip, the first areas (106-k) being preferably located on the front side of the chip.

11. A method of protecting against an attack the device of claim 9 or 10 or the chip of any of claims 1 to 8, comprising the steps of protecting against an attack:
connecting to a node of a selectable number of first areas in contact with the resistive region of the chip;
detecting a difference between measured and expected electric resistance values between said node and a second area in contact with the resistive region, said expected value being randomly selectable.

12. The method of claim 11, comprising:
a) selecting the first (106-i) and second (106-j) areas; and
b) comparing with a threshold the difference between the measured and expected values (RVp).

13. The method of claim 11 as it relates to claim 4, comprising:
selecting said number of first areas (106-k);
connecting the first areas to said node (122).

14. A method of starting an electronic chip comprising implementing the method of any of claims 11 to 13.
